# FASCICULE DE BREVET EUROPEEN

(11) **EP 1 875 446 B1**
(45) Date de publication et mention de la délivrance du brevet: **27.05.2015**
(21) Numéro de dépôt: 06709348.4
(22) Date de dépôt: 21.02.2006
(51) Int. Cl.: H04L 9/32

(54) **DISPOSITIF, PROCEDE ET SYSTEME DE SECURITE POUR TRANSACTIONS FINANCIERES, REPOSANT SUR L'IDENTIFICATION D'UN INDIVIDU GRÂCE A SON PROFIL BIO-METRIQUE, ET UTILISANT UNE CARTE A MICROPROCESSEUR**
SICHERHEITSEINRICHTUNG, VERFAHREN UND SYSTEM FÜR FINANZTRANSAKTIONEN AUF DER BASIS DER IDENTIFIKATION EINES INDIVIDUUMS UNTER VERWENDUNG EINES BIOMETRISCHEN PROFILS UND EINER CHIPKARTE
SECURITY DEVICE, METHOD AND SYSTEM FOR FINANCIAL TRANSACTIONS, BASED ON THE IDENTIFICATION OF AN INDIVIDUAL USING A BIOMETRIC PROFILE AND A SMART CARD

(30) Priorité: 07.03.2005 FR 0502247
(43) Date de publication de la demande: 09.01.2008
(73) Titulaire: Chemla, Yves, F-92100 Boulogne-Billancourt (FR); Richard, Christophe, F-75008 Paris (FR)
(72) Inventeur: Chemla, Yves, F-92100 Boulogne-Billancourt (FR); Richard, Christophe, F-75008 Paris (FR)
(74) Mandataire: Casalonga, Axel
(86) Numéro de dépôt international: PCT/FR2006/000382
(87) Numéro de publication internationale: WO 2006/095067

(56) Documents cités:
- EP-A- 1 239 629
- WO-A-01/27723
- WO-A1-2004/100053
- US-A1- 2002 062 291
- US-B1- 6 719 200
- ARGUENON V ET AL: "Système de reconnaissance faciale à base de carte à puce", COLLOQUE SUR LES RISQUES ET LA SÉCURITÉ D'INTERNET ET DES SYSTÈMES,, 1 January 2005 (2005-01-01), pages 1-12, XP007921360,

## Description

La présente invention concerne un dispositif innovant pour sécuriser les paiements, ou transactions, effectués par carte à microprocesseur, et pour valider l'identité du porteur de la carte à microprocesseur par l'intermédiaire d'un contrôle bio-métrique client/serveur, que ces paiements, ou transactions, soient opérés directement sur le point de vente ou bien à partir d'un PC (ordinateur personnel ou ordinateur en libre-service partagé) connecté à Internet, ou bien par téléphone mobile, par ordinateur portable (encore appelé laptop), par PDA (Personal Device Assistant) ou autre, ou encore par l'intermédiaire de tout autre équipement mobile ou fixe, susceptible de se connecter au travers d'un réseau de télécommunication quelconque, et d'effectuer une transaction où la biométrie entre en jeu à partir du point générateur de ladite transaction. La présente invention concerne également le cas d'un employé d'un Etablissement Financier porteur d'une carte à microprocesseur et qui effectue un transfert interbancaire à titre professionnel. Cette invention peut tout aussi bien s'appliquer aux transferts électroniques de fonds d'Etats à Etats, ou de Communauté d'Etats à Communauté d'Etats, ou à Etats, ou encore d'organismes internationaux à Etats, et réciproquement

La présente invention est conçue pour être un système d'authentification d'identité, de type client/serveur, d'un porteur de carte à microprocesseur, reposant d'une part, sur l'utilisation de la carte à microprocesseur et, d'autre part, sur l'identification du porteur au moyen de données bio-métriques stockées sur une carte à microprocesseur à mémoire étendue, par comparaison avec une base de données bio-métriques, externe et distante, sécurisée et opérée par le Tiers d'Authentification ou par l'Etablissement Financier, toutefois, pour des raisons de sécurité et de performance, sans opérer de transfert desdites données bio-métriques au travers du réseau de télécommunication.

Aujourd'hui dans le monde, les paiements ou les transactions sont généralement effectués à l'aide d'une carte à piste magnétique, dont le bordereau émis doit être signé lors d'un acte d'achat. Dans certains pays, la signature est remplacée par un Code PIN à plusieurs chiffres, qui est comparé à celui résidant sur la mémoire de la carte à microprocesseur.

D'une part, compte-tenu du volume en très forte croissance dans le monde, des transactions d'achat ou de transferts financiers, utilisant comme support une carte avec ou sans microprocesseur, de plus en plus de paiements, ou transactions, sont susceptibles de faire l'objet de fraudes, certaines transactions ne requérant pas de Code PIN. Le Code PIN assure une meilleure sécurité que la signature seule du bordereau d'achat, mais peut-être également usurpé ou volé à son propriétaire.

D'autre part, à l'heure actuelle les porteurs de cartes, à microprocesseurs ou non, sont identifiés par leur pièce d'identité; il est alors constaté que de nombreuses fraudes à la carte, à microprocesseur ou non, surviennent avec la délivrance de plusieurs cartes par différents Etablissements Financiers à un même individu, sans qu'il soit possible de le confondre par son identité telle qu'elle est fournie aujourd'hui auprès des Etablissements Financiers émetteurs. Entre autres, ces fraudes sont dues à l'utilisation de faux papiers, à l'usurpation d'identité sous quelque forme que ce soit, ou encore le vol pur et simple de cartes à microprocesseur ou non, vierges ou déjà attribuées.

On pourra également se référer au document WO 2004/10053 qui décrit un système d'authentification utilisant des données biométriques. Mais, ce système ne consiste qu'à comparer les données biométriques avec des données stockées dans une base de données.

Le dispositif selon l'invention permet de remédier à ces inconvénients et à ces fraudes, en délivrant aux Etablissements Financiers un mode de sécurisation renforcée et inviolable pour les transactions réalisées avec une carte à microprocesseur.

Ces dispositifs sont rendus possibles, aujourd'hui, de par l'augmentation effective de la taille mémoire des cartes à microprocesseur qui passent d'un niveau inférieur à 100 Ko à un niveau de plus de 512 Ko. Cette augmentation notable de la taille mémoire des cartes à microprocesseur va permettre d'inclure à l'intérieur des cartes de l'information stockée ou des logiciels développés en environnement Java® (Sun) ou .net® (Microsoft), ou avec tout autre langage disponible.

De plus, la mise à disposition de cartes permettant d'être utilisées à la fois sur un port de connexion bas débit - utilisé aujourd'hui - et un port rapide haut débit compatible, permet de procéder à des échanges rapides temps réel sur ces cartes à microprocesseur, et de pouvoir lire les logiciels, ou informations stockées, à grande vitesse. La disponibilité des deux ports de télécommunication sur microprocesseur, va permettre la migration complète et progressive du parc des terminaux de paiement, sans aucun blocage ou incompatibilité.

Cette capacité de mémoire disponible va nous permettre, d'une part, de stocker des informations graphiques à un niveau de précision suffisant pour être parfaitement exploitables, et d'autre part, d'embarquer des clefs logiciels ainsi que des algorithmes de calcul, et aussi de durcir cette algorithmique, au fur et à mesure des possibilités offertes par de nouveaux développements. On notera que la taille actuelle et courante des mémoires des cartes à microprocesseur, ainsi que la non-disponibilité d'un port de communication rapide à haut débit, ne permettait en aucun cas un tel processus.

Le Dispositif Global de l'invention comprend lui-même plusieurs dispositifs qui sont décrits ci-après. Ces dispositifs ont une nomenclature en X00100.

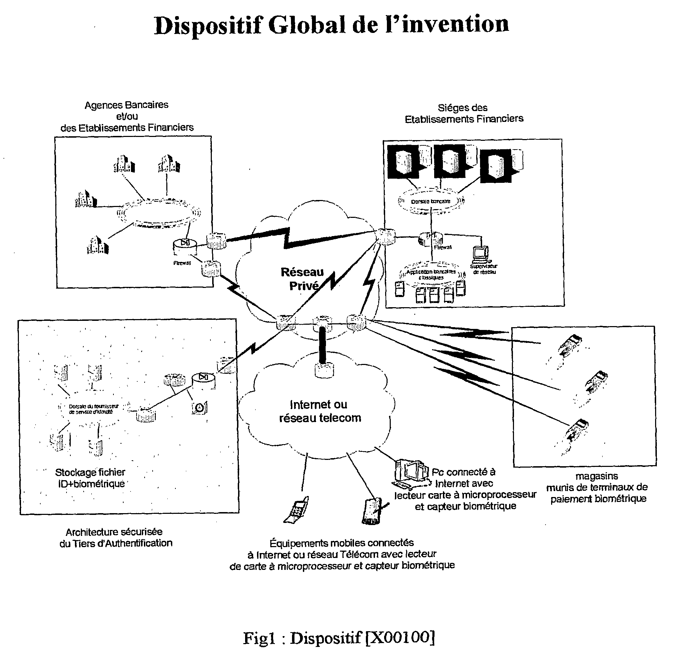

La Figure 1 représente le Dispositif Global de l'invention.

### 1. Description des Quatre Dispositifs selon l'Invention :

### 1.1 [X00100] Description du Premier Dispositif :

Format de stockage de l'information sur la carte à microprocesseur.

Ce dispositif selon l'invention correspond au stockage sur le microprocesseur de la carte à microprocesseur personnelle délivrée par l'Etablissement Financier, d'une ou de plusieurs données bio-métriques cryptées qui sont fournies par le porteur de la carte, et qui sont associées à un identifiant de convergence selon le dispositif [X00200]. Les données bio-métriques sont cryptées avant stockage sur la mémoire du microprocesseur inclus dans la carte à microprocesseur.

Pour une empreinte bio-métrique quelconque, digitale, faciale, iris, rétine, voix, ou autre, le logiciel associé au matériel (Microcontrôleur associé à une Mémoire Flash, ou dispositif équivalent) détectera une série de points critiques.

Pour des raisons tant sécuritaires que techniques, le capteur sera programmé pour sélectionner un nombre de points plus ou moins grands de 5 à plus de 30. En effet, suivant la puissance de calcul disponible sur le terminal, qui évoluera dans la durée, et le temps nécessaire pour effectuer les calculs, ainsi que la transmission des éléments résultant de ces mêmes calculs, les paramètres seront modifiables. Chaque point sera décrit par des coordonnées sur le capteur.

### 1.2 [X00200] Description du Deuxième Dispositif :

Dispositif de renseignement de la base de données biométriques.

Ce dispositif correspond au renseignement de la base de données bio-métriques, et comprend le système, selon l'invention, d'émission ou de réfutation d'émission suite à usurpation d'identité. Le contrôle d'identité est fondé sur l'établissement de deux fichiers.

Le premier fichier contient une séquence du type : Numéro de convergence, Nom, Prénom, Numéro National d'Identité, Date de naissance, Etablissement Bancaire, Numéro d'Agence, Numéro de Compte, et toute autre information nécessaire à la bonne exploitation des services financiers et bancaires. A la création, l'identifiant de convergence sera un identifiant temporaire, l'identifiant définitif n'étant fourni qu'à l'issue de l'acquittement de la validité des données par le Tiers d'Authentification.

Le deuxième fichier contient une séquence du type : Numéro de Convergence lié aux informations bio-métriques stockées sur la base de données bio-métriques des serveurs distants du Tiers d'Authentification.

Pour des raisons de sécurité, un serveur maître comportant le deuxième fichier, celui du Tiers d'Authentification, sera installé en redondance dans les locaux de l'Etablissement Financier, et pourra alors être utilisé dans le cas d'une défaillance momentanée des serveurs distants.

Le Tiers d'Authentification ne disposera que d'un extrait du premier fichier, soit le Numéro de convergence, Nom, Prénom, Numéro National d'Identité, Date de naissance, Etablissement Bancaire, Numéro d'Agence. Le Numéro de Compte ne sera pas stocké sur les serveurs distants du Tiers d'Authentification.

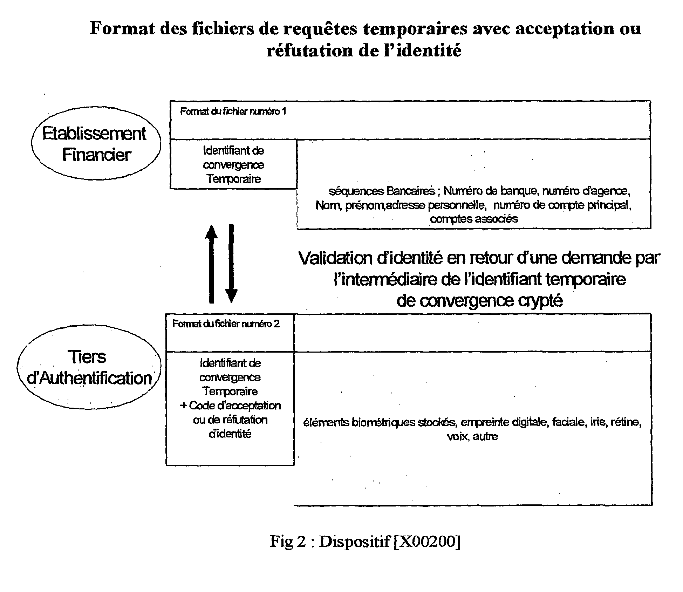

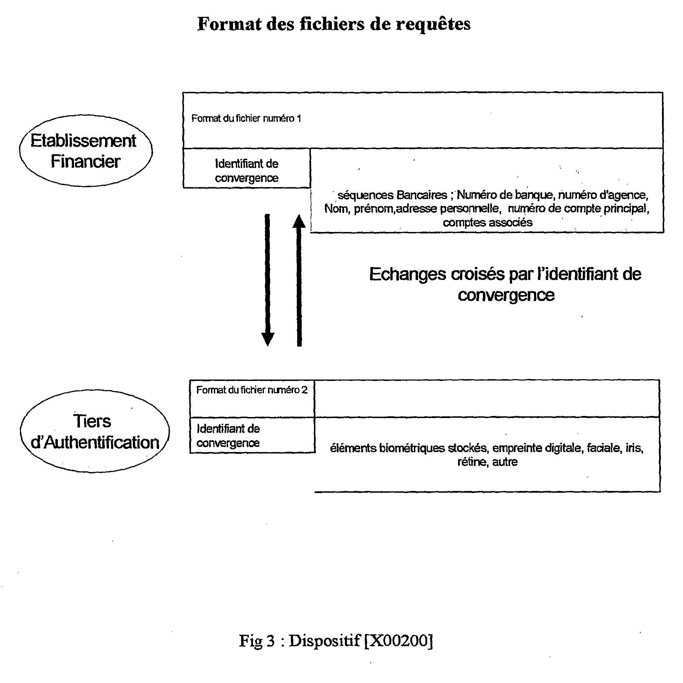

Les Figures 2 et 3 représentent le Deuxième Dispositif [X00200], ou dispositif de renseignement de la base de données bio-métriques.

### 1.3 [X00300] Description du Troisième Dispositif :

Dispositif de transfert des données bio-métriques enregistrées par les établissements financiers vers les serveurs distants du Tiers d'Authentification.

Le dispositif selon l'invention représente, par individu demandeur ou porteur d'une carte à microprocesseur, des données bio-métriques et d'identité personnelle (nom, prénom, date de naissance, etc..), recueillies par l'Etablissement Financier, la transmission et la duplication sur le serveur du Tiers d'Authentification ou serveurs distants. Ces données sont transférées par l'Etablissement Financier sur les serveurs distants, et comprennent un numéro d'identifiant temporaire généré par le logiciel fourni par le Tiers d'Authentification à l'Etablissement Financier.

Une fois les données stockées, le dispositif selon l'invention effectue une analyse comparative des données fournies avec les données existantes sur la base de données des serveurs distants du Tiers d'Authentification, si toutefois ces données existent déjà. Il sera ensuite effectué une corrélation entre les données personnelles et bio-métriques afin de renseigner l'Etablissement Financier sur l'authentification de l'individu.

Si l'individu existe déjà avec des données bio-métriques similaires mais d'identité personnelle différente, l'authentification sera rejetée et signalée à l'Etablissement Financier. En retour, l'Etablissement Financier recevra l'identifiant temporaire associé à un code de réfutation. Ce code de réfutation sera immédiatement interprété par le logiciel fourni par le Tiers d'Authentification à l'Etablissement Financier, et recommandera une non-émission de la carte pour cause d'usurpation d'identité.

Dans le cas où l'individu n'est pas déjà représenté par ses données bio-métriques et personnelles sur les serveurs distants du Tiers d'Authentification, son identité sera enregistrée comme valide. Il sera généré un numéro d'identifiant. Cet identifiant sera appelé identifiant de convergence. L'identifiant temporaire émis par l'Etablissement Financier sera alors associé à l'identifiant de convergence, et ces deux types d'identifiant seront retransmis simultanément à l'Etablissement Financier demandeur. La transmission de ces données sur le serveur de l'Etablissement Financier confirmera l'authentification de l'individu pour émission de la carte à microprocesseur.

On notera qu'un individu pourra avoir plusieurs identifiants de convergence différents, si toutefois il a effectué une demande de carte bancaire à plusieurs Etablissements Financiers différents, mais un seul identifiant de convergence par Etablissement Financier. On notera de plus, que si un individu établit plusieurs demandes simultanées d'obtention de carte à microprocesseur dans un même réseau bancaire (le même Etablissement Financier), à partir de la deuxième demande, le numéro d'identifiant temporaire, associé à un code signalé et reconnu comme un demandeur multiple, sera émis et transféré à l'Etablissement Financier, la décision d'émettre une carte, ou non, revenant à l'Etablissement Financier.

Le Tiers d'Authentification offrant ses services à plusieurs Etablissements Financiers, le dispositif selon l'invention offrira une sécurité d'autant plus accrue que le nombre d'informations recueillies sera exhaustif.

Il est précisé que, pour des raisons de sécurité et de performance, le dispositif selon l'invention ne prévoit pas le transport de données biométriques en elles-mêmes.

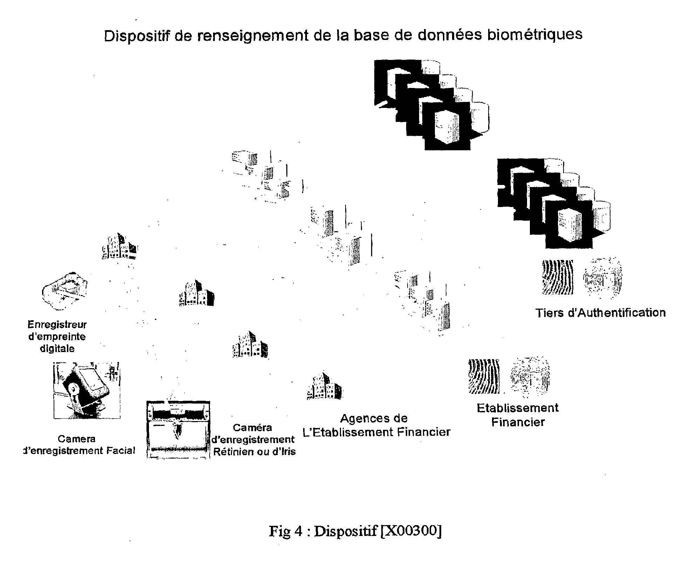

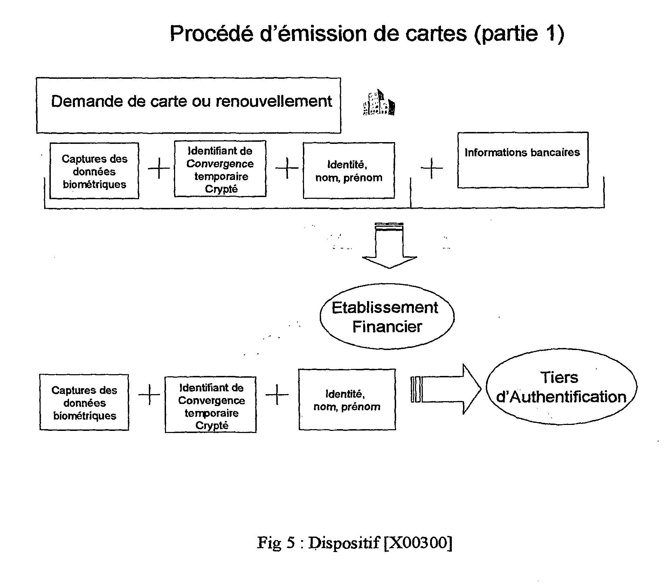

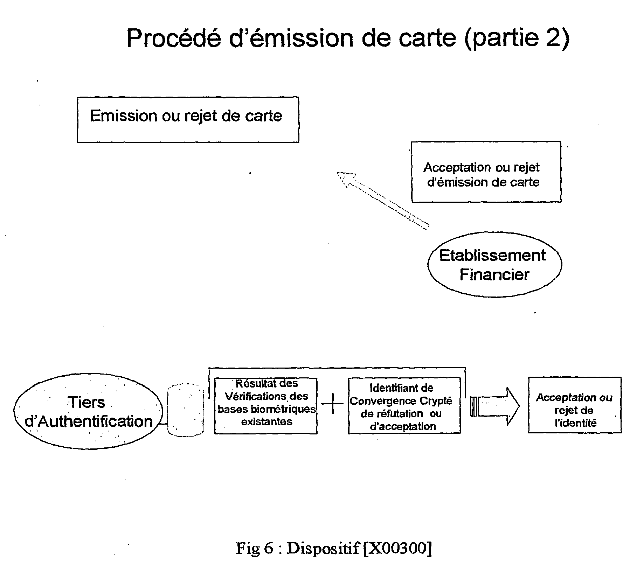

Les Figures 4, 5 et 6 représentent le Troisième Dispositif [X00300], ou dispositif de transfert des données bio-métriques enregistrées par les établissements financiers vers les serveurs distants du Tiers d'Authentification.

### 1.4 [X00400] Description du Quatrième Dispositif :

Dispositif d'authentification biométrique : il s'agit de la procédure client/serveur de validation de l'identité d'un utilisateur de carte à microprocesseur lors d'un achat, ou d'une transaction, sur point de vente ou sur Internet, ou bien par l'intermédiaire de tout autre réseau de télécommunication filaire ou sans fil (de type GSM, UMTS, Bluetooth, WiFi, ou autre), ou bien par téléphone mobile, par ordinateur portable (encore appelé laptop), par PDA (Personal Device Assistant) ou autre, ou encore par l'intermédiaire de tout autre équipement mobile ou fixe, susceptible de se connecter au travers d'un réseau de télécommunication quelconque, et d'effectuer une transaction où la biométrie entre en jeu à partir du point générateur de ladite transaction.
1.4. 1. Principe original de paiement bio-métrique par carte à microprocesseur, lors d'un achat, ou d'une transaction, sur point de vente ou sur Internet, ou bien par l'intermédiaire de tout autre réseau de télécommunication filaire ou sans fil (de type GSM, UMTS, Bluetooth, WiFi, ou autre), ou bien par téléphone mobile, par ordinateur portable (encore appelé laptop), par PDA (Personal Device Assistant) ou autre, ou encore par l'intermédiaire de tout autre équipement mobile ou fixe, susceptible de se connecter au travers d'un réseau de télécommunication quelconque, et d'effectuer une transaction où la biométrie entre en jeu à partir du point générateur de ladite transaction.

Le paiement, ou la transaction, s'effectue par l'utilisation d'un terminal de paiement par carte à microprocesseur sur le point de vente, possédant, d'une part, une connectique locale avec un capteur d'empreinte bio-métrique, et, d'autre part, un Microcontrôleur associé à une Mémoire Flash, ou tout autre dispositif équivalent, incoporé au terminal. Ce Microcontrôleur associé à une Mémoire Flash, ou tout autre dispositif équivalent, inclue la version originale du logiciel - partie intégrante du dispositif selon l'invention - qui effectuera le calcul de comparaison par rapport à la sélection des points aléatoirement choisis, comme décrit dans le premier dispositif [X00100].

Modalités du processus logiciel/Microcontrôleur associé à une Mémoire Flash, ou tout autre dispositif équivalent :
I. Capture de l'empreinte bio-métrique,
II. Lecture des identifiants,
III. Echantillonnage des points remarquables, choisis aléatoirement,
IV. Calcul algorithmique,
V. Cryptage des résultats, envoi à l'Etablissement Financier des résultats de calculs cryptés et de l'identifiant de convergence, ces derniers étant associés à la demande de paiement ou de transaction.

### 1.4.2 Déploiement logiciel et matériel :

Un Microcontrôleur associé à une Mémoire Flash, ou tout autre dispositif équivalent, contenant l'image logicielle décrite plus haut, sera incorporé dans le terminal point de vente. Il sera fourni un lecteur de carte à microprocesseur à mémoire étendue, connectée à un port rapide de type USB, ou IEEE1394, ou autre équivalent, pour les utilisateurs souhaitant effectuer un paiement ou une transaction par l'intermédiaire d'un réseau de télécommunication, de type Internet ou autre. De la même manière, une image logicielle pourra être intégrée à l'ordinateur personnel ou PC, au téléphone mobile, à l'ordinateur portable (encore appelé laptop), au PDA (Personal Device Assistant) ou autre, ou encore à tout autre équipement mobile ou fixe, susceptible de se connecter au travers d'un réseau de télécommunication quelconque, et d'effectuer une transaction où la biométrie entre en jeu à partir du point générateur de ladite transaction, ou encore à tout autre outil utilisant une connectivité au travers d'un réseau distant et incorporant un capteur bio-métrique, un calculateur, et une mémoire permettant le stockage dudit logiciel (mémoire volatile ou non volatile).

L'algorithmique sera fournie sur un support physique de type CD ou DVD Rom, ou téléchargeable, que l'utilisateur d'un système distant pourra charger sur sa machine.

Des versions d'actualisation (mises-à-jour) seront déployées à fréquence variable afin de pouvoir générer des algorithmiques différentes, offrant des résultats de calcul différents ; ces variantes permettent au gestionnaire des identifiants de garantir un très haut niveau de sécurité et de qualité sur la validation de l'identité des personnes utilisant ce système.

De manière identique, soit sur le terminal point de vente, soit sur l'ordinateur personnel distant connecté, ou soit sur tout autre outil connecté, il sera procédé à la vérification de la version logicielle incluse et disponible sur chaque machine. Sur le terminal point de vente, ou sur la version d'ordinateur personnel, ou bien sur tout autre outil connecté, il pourra être décidé d'effectuer un téléchargement pouvant permettre un autre calcul d'authentification, dans le cas où la version utilisée lors de la transaction précédente serait obsolète.

L'ordinateur personnel ou PC, le téléphone mobile, l'ordinateur portable (encore appelé laptop), le PDA (Personal Device Assistant) ou autre, ou encore tout autre équipement mobile ou fixe, susceptible de se connecter au travers d'un réseau de télécommunication quelconque, et d'effectuer une transaction où la biométrie entre en jeu à partir du point générateur de ladite transaction, ou tout autre outil utilisant une connectivité au travers d'un réseau distant et incorporant un calculateur, et une mémoire permettant le stockage dudit logiciel (mémoire volatile ou non volatile), devra comporter un ou plusieurs capteurs bio-métriques, soit intégrés, soit connectés en tant que périphériques.

### 1.4.3. Procédé et architecture relatives à l'authentification du porteur de carte à microprocesseur:

Sur le point de vente, lors d'un achat, un consommateur présentera sa carte à microprocesseur, il lui sera alors demandé d'apposer, par exemple, son doigt sur un capteur bio-métrique.

Le Dispositif selon l'invention - basé sur une architecture client/serveur, comprenant du matériel - un Microcontrôleur associé à une Mémoire Flash, ou dispositif équivalent - des capteurs bio-métriques (doigts, facial, iris, rétine, voix ou autres) et un logiciel original programmé et stocké sur la carte à microprocesseur - prend en charge l'identification du porteur de la carte à microprocesseur.

Le dispositif selon l'invention repose sur une architecture de requête unique, comportant deux volets, le premier, une demande de transaction à destination de l'Etablissement Financier, et le deuxième, une demande de validation d'identité à destination des serveurs du Tiers d'Authentification, ou de l'Etablissement Financier.

### 1.4.3.1. Première Partie du Dispositif [X00400] :

Le Dispositif [X00400] selon l'invention effectue une corrélation, en mode local, entre les données cryptées stockées sur le microprocesseur de la carte à microprocesseur et décrites dans le premier dispositif [X00100], et les données bio-métriques recueillies auprès du porteur de la carte à microprocesseur. Ceci est possible grâce à un logiciel original développé selon l'invention et intégré dans un Microcontrôleur associé à une Mémoire Flash, ou tout autre dispositif équivalent, qui est inséré dans le terminal support de la transaction.

Le logiciel et le Microcontrôleur associé à une Mémoire Flash, ou tout autre dispositif équivalent, incorporeront une gestion de la translation de la matrice orthonormée, afin d'éviter les écueils de positionnement sur le capteur, (on peut, par exemple, orienter son doigt de plusieurs degrés à droite ou à gauche par rapport à l'axe théorique du capteur).

La position des points par rapport au référentiel (Matrice du capteur) ainsi que la position des points entre eux, ainsi que leur orientation vectorielle fera l'objet d'une analyse qui, dans un premier temps, sera comparée au même calcul disponible sur la carte à microprocesseur elle même.

Cette comparaison fera apparaître une corrélation immédiate ou non par rapport à l'empreinte vivante.

On notera que le capteur d'empreinte sera de type thermométrique ou autre, afin de vérifier si le sujet est vivant ou non, et s'il ne s'agit pas d'une copie image de ladite empreinte. Les autres types de capteur comporteront une vérification infrarouge, ou autre, contrôlant la température du sujet.

### 1.4.3.2. Deuxième Partie du Dispositif [X00400] :

Le Dispositif selon l'invention [X00400] effectue une corrélation entre les données cryptées décrites dans le Dispositif [X00200], et les données cryptées résidentes sur les serveurs distants du Tiers d'Authentification, ceci par l'intermédiaire d'un calcul local dont les résultats sont retransmis aux serveurs distants du Tiers d'Authentification, ou de l'Etablissement Financier, qui effectue les mêmes calculs et en analyse de nouveau les résultats. Ces résultats sont accompagnés de l'identifiant de convergence crypté, et de la partie de code Java® (Sun) ou .net® (Microsoft), ou de tout autre langage disponible, stockés sur la carte à microprocesseur, ainsi que des informations relatives à la transaction elle-même.

L'identifiant de convergence, les résultats du calcul local, la partie de code Java® (Sun) ou .net® (Microsoft), ou de tout autre langage disponible, sont retransmis en une requête unique, par le terminal, à l'Etablissement Financier, qui lui même retransmet au Tiers d'Authentification, ou à l'Etablissement Financier, l'identifiant de convergence, les résultats du calcul local, la partie de code Java® ( Sun) ou .net® (Microsoft), ou de tout autre langage disponible, pour vérification d'identité.

Pendant la préparation des résultats par le Tiers d'Authentification, l'Etablissement Financier effectue ses propres vérifications financières sur le compte du porteur de la carte à microprocesseur, en attente de l'acceptation ou de la réfutation de l'identité du porteur de la carte à microprocesseur par le Tiers d'Authentification, ou par l'Etablissement Financier lui-même. Une fois l'acceptation ou la réfutation de l'identité du porteur de la carte à microprocesseur prononcée par le Tiers d'Authentification, l'Etablissement Financier clôture la transaction.

Les opérations de contrôle d'identité sont effectuées en temps réel.

La procédure sera strictement identique si l'achat se fait au travers d'Internet, ou par tout autre moyen, ou bien par l'intermédiaire de tout autre réseau de télécommunication filaire ou sans fil (de type GSM, UMTS, Bluetooth, WiFi, ou autre), ou bien par téléphone mobile, par ordinateur portable (encore appelé laptop), par PDA (Personal Device Assistant) ou autre, ou encore par l'intermédiaire de tout autre équipement mobile ou fixe, susceptible de se connecter au travers d'un réseau de télécommunication quelconque, et d'effectuer une transaction où la biométrie entre en jeu à partir du point générateur de ladite transaction.

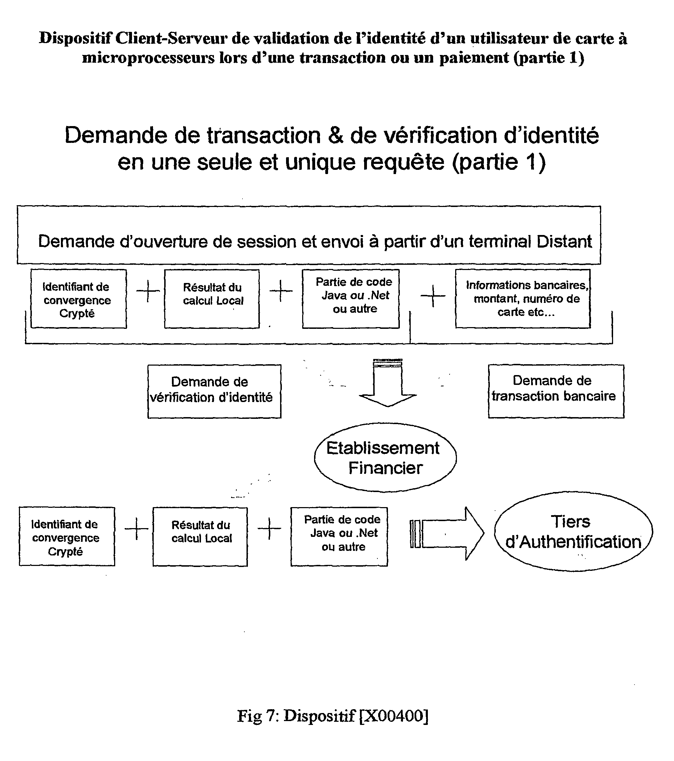

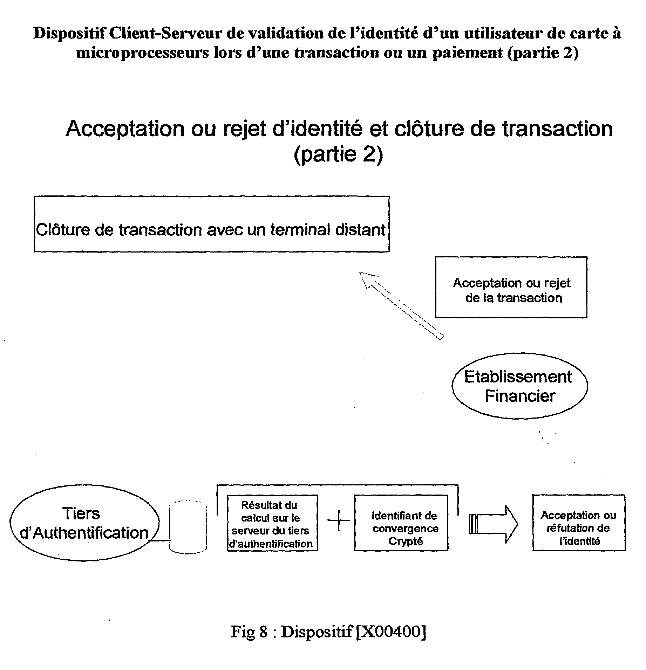

Les Figures 7 et 8 représentent le Quatrième Dispositif [X00400], ou dispositif client/serveur de validation de l'identité d'un utilisateur de carte à microprocesseur lors d'un achat sur point de vente ou sur Internet, ou bien par l'intermédiaire de tout autre réseau de télécommunication filaire ou sans fil (de type GSM, UMTS, Bluetooth, WiFi, ou autre), ou bien par téléphone mobile, par ordinateur portable (encore appelé laptop), par PDA (Personal Device Assistant) ou autre, ou encore par l'intermédiaire de tout autre équipement mobile ou fixe, susceptible de se connecter au travers d'un réseau de télécommunication quelconque, et d'effectuer une transaction où la biométrie entre en jeu à partir du point générateur de ladite transaction.

### 2. [X00500] : Descriptif par étape du dispositif d'authentification selon l'invention, et décrit précédemment.

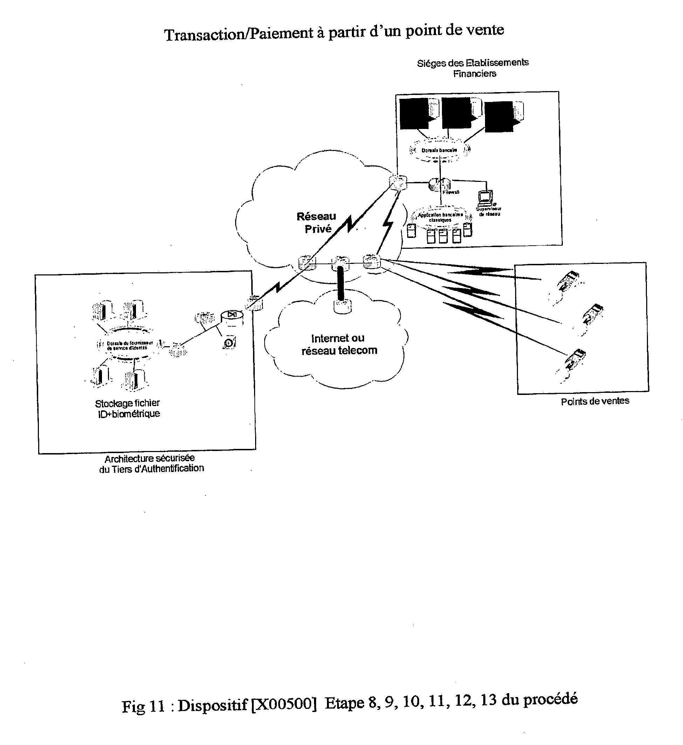

Etape 1 : L'Etablissement Financier reçoit de la part d'un porteur une demande d'émission d'une carte à microprocesseur.
Etape 2 : L'Etablissement Financier demande au futur porteur de la carte à microprocesseur de se soumettre à une capture de ses empreintes bio-métriques.
Etape 3 : Procédure de stockage des empreintes bio-métriques sur le serveur de l'agence bancaire, puis transfert sur le serveur central de l'Etablissement Financier, avec destruction des données présentes sur le serveur de l'agence pour des raisons de sécurité.
Etape 4: Procédure de stockage des empreintes bio-métriques sur les serveurs distants du Tiers d'Authentification.
Etape 5 : L'Etablissement Financier demande une validation de l'identité en émettant une requête aux serveurs distants du Tiers d'Authentification.
Etape 6 : La requête précédente est acceptée, aucune empreinte biométrique similaire n'ayant déjà été déposée par le demandeur pour l'émission d'une carte à microprocesseur.
Etape 7 : L'Etablissement Financier décide d'émettre la carte au nom du demandeur, et la ou les empreintes bio-métriques fournies, l'identifiant de convergence, les résultats du calcul local, la partie de code Java® (Sun) ou .net® (Microsoft), ou de tout autre langage disponible, sont stockées sur le Microcontrôleur associé à une Mémoire Flash, ou tout autre dispositif équivalent, inclus dans la carte à microprocesseur.
Etape 8 : Le porteur de la carte à microprocesseur se présente à un point de vente et veut procéder à l'achat d'une marchandise d'une valeur de 100 Euros.
Etape 9 : La carte à microprocesseur du porteur est insérée dans le terminal de paiement, et il est demandé au porteur d'apposer son doigt, ou toute autre partie du corps, sur le capteur bio-métrique ou face au capteur bio-métrique approprié, suivant la région du corps devant être validée.
Etape 10 : En mode local, le terminal de paiement valide la cohérence des deux empreintes, celle de la carte et celle du capteur.
Etape 11 : Ayant validé en mode local la cohérence des deux empreintes (celle stockée sur la carte à microprocesseur, et celle de la partie vivante du corps, le terminal de paiement envoie, en mode distant, une requête unique comprenant deux volets, l'un à destination de l'Etablissement Financier, et l'autre à destination des serveurs du Tiers d'Authentification, comme décrit en [X00400].
Etape 12 : Le Tiers d'Authentification valide à son tour la cohérence de l'identité bio-métrique du porteur de la carte à microprocesseur et de l'identité bio-métrique stockée sur ses serveurs ; il émet alors, en retour, un code de validation ou de réfutation d'identité à destination de l'Etablissement Financier.
Etape 13 : L'Etablissement Financier autorise ou non la transaction de 100 Euros, en fonction des données de solvabilité financière, en envoyant un ordre positif ou négatif au terminal de paiement (Figure 11).

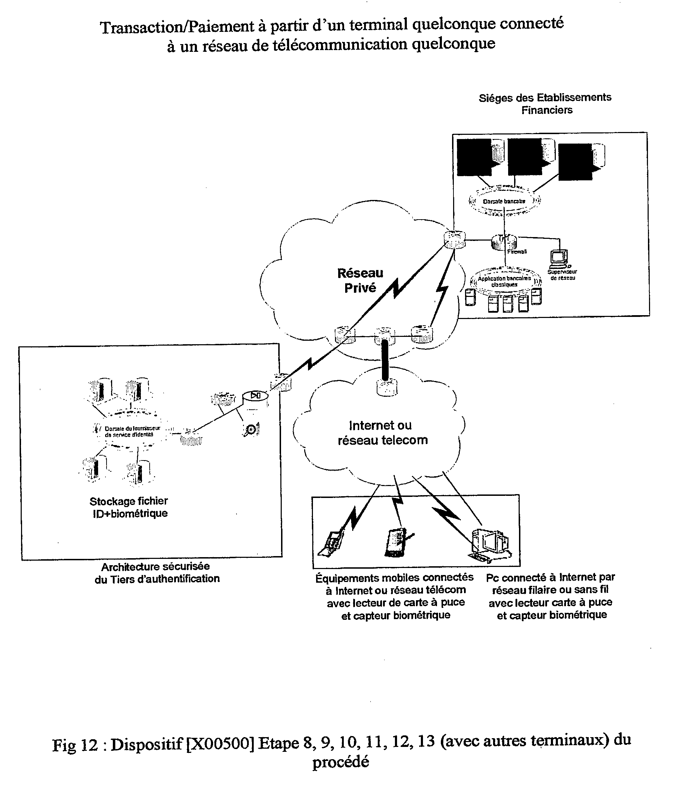

De la même manière, l'Etablissement Financier autorise ou non la transaction de 100 Euros, en fonction des données de solvabilité financière, en envoyant un ordre positif ou négatif sur l'un quelconque des autres types de terminaux disponibles sur le marché, comme le téléphone mobile, l'ordinateur portable (encore appelé laptop), le PDA (Personal Device Assistant) ou autre, ou encore tout autre équipement mobile ou fixe, susceptible de se connecter au travers d'un réseau de télécommunication quelconque, et d'effectuer une transaction où la biométrie entre en jeu à partir du point générateur de ladite transaction (Figure 12)

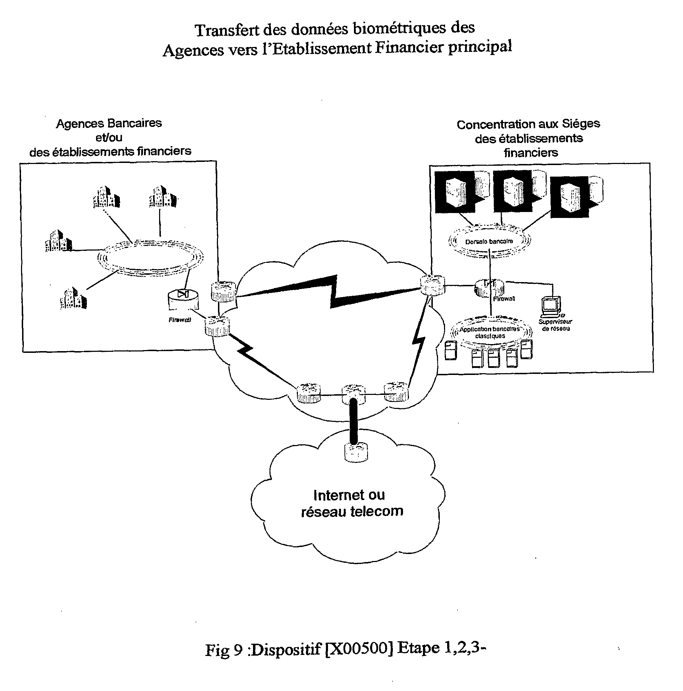

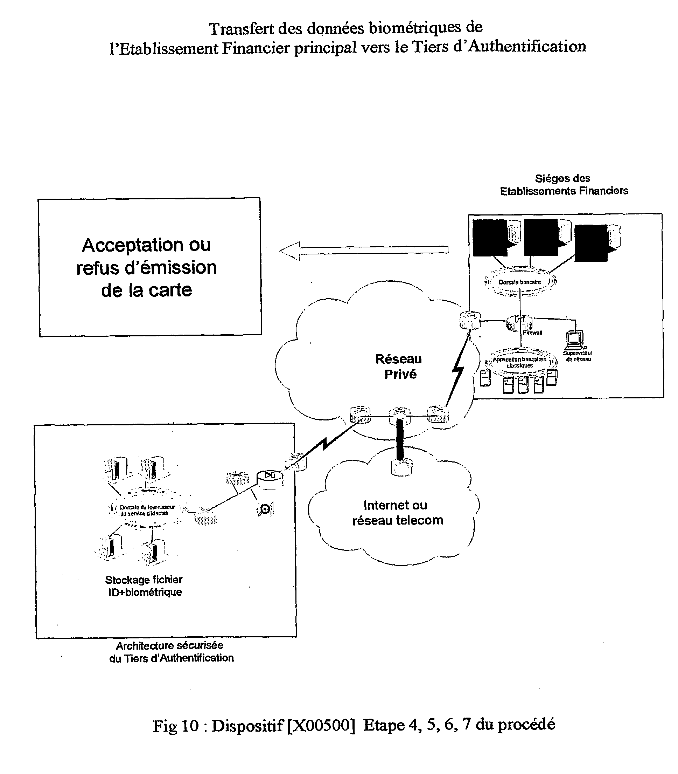

Les Figure 9, 10, 11 et 12 représentent dispositif par étapes [X00500].

## Revendications

1. Système destiné à fournir une authentification bio-métrique d'un porteur de carte à microprocesseur qui effectue une transaction électronique où la biométrie entre en jeu à partir du point générateur de ladite transaction, ledit porteur de carte à microprocesseur étant connecté à un moyen de communication et à un terminal de paiement biométrique, ou tout autre terminal transactionnel comportant un lecteur de carte à microprocesseur conçu pour recevoir un logiciel dédié opérant comme une passerelle de communication envers des serveurs distants d'un Tiers d'Authentification, et comportant une liaison à un ou plusieurs capteurs bio-métriques, intégrés ou non au terminal, lequel est connecté à un ordinateur relié audit moyen de communication ;
**caractérisé en ce qu'**il comprend :
- un premier dispositif (X00100) adapté pour stocker sur le microprocesseur de la carte à microprocesseur personnelle délivrée par un établissement financier, une ou plusieurs données bio-métriques cryptées fournies par le porteur de la carte, et associées à un identifiant de convergence issu d'un deuxième dispositif, les données bio-métriques, étant à caractéristique morphologique - empreintes digitales, faciales, iris, rétine, voix, ou autre, et cryptées avant stockage sur la mémoire du microprocesseur inclus dans la carte à microprocesseur.
- ledit deuxième dispositif (X00200) adapté à recevoir les données biométriques du porteur, et calculer un identifiant de convergence temporaire associé à ces données biométriques, et adapté à renseigner la base de données biométriques dedits serveurs distants, et à contrôler l'identité à l'aide de fichiers, d'une part un fichier issu d'une prise d'empreinte biométrique temps-réel et d'autre part une base de données centrale comportant pour chaque individu un fichier maitre stable sur les serveurs distants comprenant une séquence de données contenant un identifiant de convergence source lié aux informations biométriques stockées sur la base de données biométriques des serveurs distants du Tiers d'Authentification, permettant d'effectuer la corrélation des identités par comparaison des deux fichiers, l'identifiant de convergence étant à la création un identifiant de convergence temporaire généré par un logiciel fourni par le Tiers d'Authentification à l'établissement financier, un identifiant définitif n'étant fourni qu'à l'issu de l'acquittement de la validité des données par le Tiers d'Authentification,
- un troisième dispositif (X00300) permettant le transfert des données biométriques enregistrées par l'établissement financier vers les serveurs distants du Tiers d'Authentification, ces données comprenant l'identifiant de convergence temporaire ;
les premier, deuxième et troisième dispositifs étant mis en oeuvre lors de l'enregistrement des données biométriques ;
- un quatrième dispositif (X00400) qui est mis en oeuvre pour l'authentification biométrique et permettant ladite authentification bio-métrique, en effectuant un calcul de corrélation local entre les données cryptées stockées sur le microprocesseur de la carte à microprocesseur et décrites dans le premier dispositif, et les données biométriques recueillies auprès du porteur de la carte à microprocesseur, dont le résultat est retransmis aux serveurs distants du Tiers d'Authentification et de l'établissement financier, effectue le même calcul et en analyse de nouveau le résultat, en effectuant une corrélation distante entre les données des fichiers issus d'une prise d'empreinte biométrique temps-réel et cryptées, et les données cryptées résidentes sur les serveurs distants du Tiers d'Authentification, à savoir le fichier maître stable de chaque individu, en utilisant l'identifiant de convergence.

2. Système selon la revendication 1, **caractérisé en ce que** le terminal de lecture de la carte à microprocesseur est un terminal mobile, personnel et portable dont le moyen de communication avec le serveur distant d'authentification est le réseau Internent, ou tout autre réseau de télécommunication filaire ou sans fil de type GSM5 UMTS, Bluetooth, WiFi, ou autre.

3. Système selon la revendication 1, **caractérisé en ce que** le premier fichier contient une séquence du type : Numéro de convergence, Nom, Prénom, Numéro National d'Identité, Date de naissance, Etablissement Bancaire, Numéro d'Agence, Numéro de Compte.

4. Système selon la revendication 1, **caractérisé en ce que** le deuxième fichier contient une séquence du type : Numéro de Convergence encore appelé Identifiant de convergence lié aux informations biométriques stockées sur la base de données biométriques des serveurs distants du Tiers d'Authentification.

## Patentansprüche

1. System, das dazu bestimmt ist, eine biometrische Authentifizierung eines Trägers einer Mikroprozessorkarte zu liefern, das eine elektronische Transaktion, bei der die Biometrie zum Einsatz kommt, ausgehend von dem Erzeugerpunkt der Transaktion ausführt, wobei der Träger der Mikroprozessorkarte mit einem Kommunikationsmittel und mit einem biometrischen Zahlungsendgerät oder mit jedem anderen Transaktionsendgerät, das einen Leser für Mikroprozessorkarten enthält, der dafür ausgelegt ist, eine spezifische Software zu empfangen, die als eine Kommunikationsbrücke gegenüber entfernten Servern einer Authentifizierung durch Dritte arbeitet, verbunden ist und eine Verbindung mit einem oder mehreren biometrischen Sensoren, die in das Endgerät integriert sind oder nicht, umfasst, wobei das System mit einem Computer verbunden ist, der mit dem Kommunikationsmittel verbunden ist;
**dadurch gekennzeichnet, dass** es umfasst:
- eine erste Vorrichtung (X00100), die dafür ausgelegt ist, in dem Mikroprozessor der persönlichen Mikroprozessorkarte, die von einer Finanzinstitution ausgegeben wird, eine oder mehrere verschlüsselte biometrische Daten zu speichern, die von dem Träger der Karte geliefert werden und einer Konvergenzidentifizierung zugeordnet sind, die von einer zweiten Vorrichtung ausgegeben wird, wobei die biometrischen Daten eine morphologische Charakteristik haben - digitale Abdrücke, Gesichter, Iris, Retina, Stimme oder dergleichen, und vor dem Speichern in dem Speicher des in der Mikroprozessorkarte enthaltenen Mikroprozessors verschlüsselt werden,
- eine zweite Vorrichtung (X00200), die dafür ausgelegt ist, die biometrischen Daten des Trägers zu empfangen und eine temporäre Konvergenzidentifizierung zu berechnen, die diesen biometrischen Daten zugeordnet ist und dafür ausgelegt ist, die biometrische Datenbank der entfernten Server abzufragen und die Identität mit Hilfe von Dateien zu kontrollieren, einerseits einer Datei, die von der Abnahme eines biometrischen Abdrucks in Echtzeit stammt, und andererseits einer zentralen Datenbank, die für jede einzelne Person eine stabile Master-Datei in den entfernten Servern enthält, die eine Datensequenz umfasst, die eine Quellen-Konvergenzidentifizierung enthält, die mit den in der biometrischen Datenbank der entfernten Server der Authentifizierung durch Dritte gespeicherten Informationen in Beziehung steht, was die Ausführung der Korrelation der Identitäten durch Vergleichen der beiden Dateien ermöglicht, wobei die Konvergenzidentifizierung bei der Erzeugung eine temporäre Konvergenzidentifizierung ist, die durch eine von der Authentifizierung durch Dritte bei der Finanzinstitution gelieferten Software erzeugt wird, wobei eine endgültige Kennung nur bei Ausgabe der Bestätigung der Gültigkeit der Daten durch die Authentifizierung durch Dritte geliefert wird,
- eine dritte Vorrichtung (X00300), die die Übertragung der biometrischen Daten, die durch die Finanzinstitution aufgezeichnet werden, zu den entfernten Servern der Authentifizierung durch Dritte ermöglicht, wobei diese Daten die temporäre Konvergenzidentifizierung enthalten;
wobei die erste, die zweite und die dritte Vorrichtung bei der Aufzeichnung der biometrischen Daten verwendet werden;
- eine vierte Vorrichtung (X00400), die für die biometrische Authentifizierung verwendet wird und die biometrische Authentifizierung ermöglicht, indem sie eine Berechnung der lokalen Korrelation zwischen den in dem Mikroprozessor der Mikroprozessorkarte gespeicherten verschlüsselten und in die erste Vorrichtung geschriebenen Daten und den biometrischen Daten, die bei dem Träger der Mikroprozessorkarte gesammelt werden, ausführt, deren Ergebnis zu den entfernten Servern der Authentifizierung durch Dritte und der Finanzinstitution zurückgesendet werden, die die gleiche Berechnung ausführt und erneut das Ergebnis analysiert, indem sie eine Fernkorrelation zwischen den Daten der Dateien, die von einer Echtzeitabnahme eines biometrischen Abdrucks stammen und verschlüsselt sind, und den verschlüsselten Daten, die in den entfernten Servern der Authentifizierung durch Dritte vorhanden sind, nämlich der stabilen Master-Datei jeder Einzelperson, in dem die Konvergenzidentifizierung verwendet wird, ausführt.

2. System nach Anspruch 1, **dadurch gekennzeichnet, dass** das Endgerät zum Lesen der Mikroprozessorkarte ein mobiles, persönliches und tragbares Endgerät ist, dessen Mittel für die Kommunikation mit dem entfernten Authentifizierungs-Server das Internet-Netz oder jedes andere drahtgebundene oder drahtlose Telekommunikationsnetz des Typs GSM5 UMTS, Bluetooth, WiFi oder dergleichen ist.

3. System nach Anspruch 1, **dadurch gekennzeichnet, dass** die erste Datei eine Sequenz des folgenden Typs umfasst: Konvergenznummer, Name, Vorname, Nummer der nationalen Identität, Geburtsdatum, Bankeinrichtung, Zweigstellennummer, Kontonummer.

4. System nach Anspruch 1, **dadurch gekennzeichnet**, das die zweite Datei eine Sequenz des folgenden Typs umfasst: Konvergenznummer, die auch Konvergenzidentifizierung genannt wird, die mit den biometrischen Informationen in Beziehung steht, die in der biometrischen Datenbank der entfernten Server der Authentifizierung durch Dritte gespeichert sind.

## Claims

1. System designed to provide a biometric authentication of a smart card holder which performs an electronic transaction in which biometrics are involved from the point generating said transaction, said smart card holder being connected to a communication means and to a biometric payment terminal, or any other transactional terminal comprising a smart card reader designed to receive dedicated software operating as a communication gateway to the remote servers of an authentication third party, and comprising a link to one or more biometric sensors, incorporated or not in the terminal, which is connected to a computer linked to said communication means;
**characterized in that** it comprises:
- a first device [X00100] suitable for storing on the microprocessor of the personal smart card delivered by a financial institution, one or more encrypted biometric data items supplied by the card holder, and associated with a convergence identifier obtained from a second device, the biometric data being of a morphological nature - finger, face, iris, retina, voice or other imprints, and encrypted before storage in the microprocessor memory included in the smart card,
- said second device [X00200] suitable for receiving the biometric data of the holder, and for computing a temporary convergence identifier associated with these biometric data, and suitable for informing the biometric database of said remote servers, and for checking the identity using files, on the one hand deriving from a real-time biometric printing and on the other hand a central database comprising, for each individual, a stable master file on the remote servers comprising a sequence of data containing a source convergence identifier linked to the biometric information stored on the biometric database of the remote servers of the authentication third party, making it possible to perform the correlation of the identities by comparison of the two files, the convergence identifier being, on creation, a temporary convergence identifier generated by software supplied by the authentication third party to the financial institution, a final identifier being supplied only after the acknowledgement of the validity of the data by the authentication third party.
- a third device [X00300] for transferring the biometric data stored by the financial institution to the remote servers of the authentication third party, this data comprising
the temporary convergence identifier; the first, second and third devices being implemented upon the storage of the biometric data;
- a fourth device [X00400] which is implemented for the biometric authentication and that makes said biometric authentication possible, by performing a local correlation computation between the encrypted data stored on the microprocessor of the smart card and described in the first device, and the biometric data collected from the holder of the smart card, the result of which is retransmitted to the remote servers of the authentication third party and of the financial institution, which performs the same computation and once again analyses the result thereof, by performing a remote correlation between the data of the files obtained from a real-time biometric printing and encrypted, and the encrypted data resident on the remote servers of the authentication third party, namely the stable master file of each individual, by using the convergence identifier.

2. System according to Claim 1, **characterized in that** the smart card reading terminal is a mobile, personal and portable terminal, in which the means of communication with the remote authentication server is the Internet network, or any other wired or wireless telecommunication network of the type GSM5 UMTS, Bluetooth, WiFi or other.

3. System according to Claim 1, **characterized in that** the first file contains a sequence of the type: convergence number, name, first name, national identity number, date of birth, bank, branch number, account number.

4. System according to Claim 1, **characterized in that** the second file contains a sequence of the type: convergence number, also called convergence identifier, linked to the biometric information stored on the biometric database of the remote servers of the authentication third party.
